# EUROPEAN PATENT SPECIFICATION

(11) **EP 4 156 574 B1**
(45) Date of publication and mention of the grant of the patent: **11.12.2024**
(21) Application number: 22196060.2
(22) Date of filing: 16.09.2022
(51) Int. Cl.: H04L 1/08, H04W 76/14, H04W 76/15, H04W 88/04, H04L 45/24, H04W 28/02

(54) **IP-BASED UE AGGREGATION**
IP-BASIERTE BENUTZERGERÄTEAGGREGATION
AGRÉGATION D'UE BASÉE SUR IP

(30) Priority: 24.09.2021 WO PCT/CN2021/120270
(43) Date of publication of application: 29.03.2023
(73) Proprietor: Apple Inc., Cupertino CA 95014 (US)
(72) Inventor: XU, Fangli, Beijing (CN); NUGGEHALLI, Pavan, Cupertino (US); SIROTKIN, Alexander, Herzliya (IL); HU, Haijing, Cupertino (US); PALLE VENKATA, Naveen Kumar, San Diego, United States (US); ROSSBACH, Ralf, Neubiberg (DE); VANGALA, Sarma V, Cupertino, United States (US); GURUMOORTHY, Sethuraman, Cupertino, United States (US); CHEN, Yuqin, Beijing, China (CN); WU, Zhibin, Cupertino, United States (US)
(74) Representative: Simmons & Simmons

(56) References cited:
- WO-A2-2023/280978
- US-A1- 2021 153 063
- US-A1- 2021 219 110
- FATTAH HOSSAM ABDEL: "5G NR: Service Data Adaptation Protocol (SDAP) sub-layer - 5G HUB TECHNOLOGIES, INC", 10 November 2018 (2018-11-10), pages 1 - 5, XP093020310, Retrieved from the Internet <URL:https://5ghub.us/5g-nr-service-data-adaptation-protocol-sdap-sub-layer/> [retrieved on 20230202]
- AIJAZ ADNAN: "Packet Duplication in Dual Connectivity Enabled 5G Wireless Networks: Overview and Challenges", IEEE COMMUNICATIONS STANDARDS MAGAZINE, IEEE, vol. 3, no. 3, 1 September 2019 (2019-09-01), pages 20 - 28, XP011759192, ISSN: 2471-2825, [retrieved on 20191206], DOI: 10.1109/MCOMSTD.001.1700065

## Description

### BACKGROUND

A user equipment (UE) may establish a connection to at least one of a plurality of different networks or types of networks, for example a 5G New Radio (NR) radio access technology (RAT). The UE may also be configured to communicate with a further UE, or multiple further UEs, via a device-to-device (D2D) connection, for example a wired connection, a wireless local area network (WLAN) link or a 3GPP-specified sidelink. In some cases (e.g., when the UEs are not proximate), the D2D link may be made secure, e.g., by creating an IPSec tunnel. The further UE(s) may additionally establish a network connection, for example on the same network as the UE.

Some UEs may operate in accordance with specifications that limit the bandwidth of uplink (UL) and/or downlink (DL) communications with the network. For example, some 3GPP specifications limit the transmit power of a UE to minimize human exposure to electromagnetic radiation, in accordance with regulations imposed by the country where the UE is deployed. These power limitations may provide an upper bound on the UL and/or DL bandwidth attainable by the UE. When one or more further UEs having respective network connections are available for use, it may be beneficial to aggregate the capabilities of the UEs.
US2021/0153063 discloses relay-based UE cooperation by a group of UEs and a configuration including an adaption protocol for processing UC bearer traffic.
An internet article by Hossam Abdel Fattah titled "5G NR: Service Data Adaptation Protocol (SDAP) sub-layer" cited under the reference XP93020310A discusses the SDAP layer and QFI information.
The publication titled "Packet Duplication in Dual Connectivity Enabled 5G Wireless Networks: Overview and challenges" cited under the reference XP11759192A discloses a split bearer configuration in which traffic is routed via one bearer of the split when volume is below a threshold.

### SUMMARY

The invention is defined by the appended independent claims. A selection of optional features is set out in the dependent claims.

### Brief Description of the Drawings

Fig. 1 shows an exemplary network arrangement according to various exemplary embodiments.
Fig. 2 shows an exemplary UE according to various exemplary embodiments.
Fig. 3 shows an exemplary network base station according to various exemplary embodiments.
Fig. 4 shows an exemplary network arrangement for UE aggregation operations according to various exemplary embodiments described herein.
Fig. 5 shows a protocol stack arrangement for a primary UE and a secondary UE in a UE aggregation arrangement according to various exemplary embodiments described herein.
Fig. 6 shows an exemplary method for UE aggregation operations according to various exemplary embodiments described herein.

### Detailed Description

The exemplary embodiments may be further understood with reference to the following description and the related appended drawings, wherein like elements are provided with the same reference numerals. The exemplary embodiments relate to operations for aggregating the transmit and/or receive capabilities of two or more UEs for data exchanges with a network. The exemplary embodiments are described with respect to a primary UE having a device-to-device (D2D) communication link to a secondary UE, and both the primary and secondary UEs having a radio link with a network. According to some aspects, the primary UE may split UL traffic between the radio links of the primary UE and the secondary UE to utilize the radio resources of both UEs. The primary UE may transmit certain uplink (UL) packets to the network via a primary radio link and distribute certain other UL packets to the secondary UE via the D2D link for transmission to the network via a secondary radio link. In a similar manner, downlink (DL) traffic for the primary UE may be split between the primary link and the secondary link, wherein the secondary UE forwards DL packets received from the network to the primary UE.

The exemplary embodiments are described with regard to a UE. However, the use of a UE is merely provided for illustrative purposes. The exemplary embodiments may be utilized with any electronic component that is configured with the hardware, software, and/or firmware to exchange information (e.g., control information) and/or data with the network. Therefore, the UE as described herein is used to represent any suitable electronic device.

Additionally, the UE as described herein may refer to a primary UE configured for a first subset of UE aggregation functionalities or one or more secondary UEs configured for a second subset of UE aggregation functionalities. However, the person skilled in the art would understand that the functionalities of the primary UE and the secondary UE may be included in a single UE, and that the UEs as described herein are not limited to operation as only a primary UE or a secondary UE in a UE aggregation operation.

The exemplary embodiments are also described with regard to a 5G New Radio (NR) network. However, reference to a 5G NR network is merely provided for illustrative purposes. The exemplary embodiments may be utilized with any network including a Long Term Evolution (LTE) network, to be explained below. Therefore, the 5G NR network as described herein may represent any type of network that can implement a UE aggregation functionality in a similar manner as described herein.

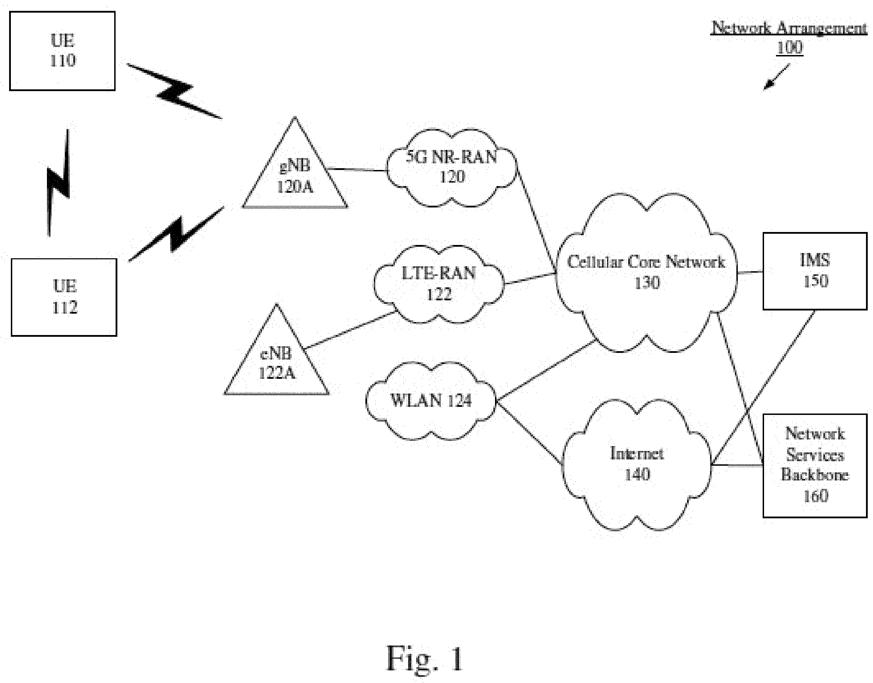

Fig. 1 shows an exemplary network arrangement 100 according to various exemplary embodiments. The exemplary network arrangement 100 includes UEs 110, 112. Those skilled in the art will understand that the UEs 110, 112 may be any type of electronic component that is configured to communicate via a network, e.g., a component of a connected car, a mobile phone, a tablet computer, a smartphone, a phablet, an embedded device, a wearable, an Internet of Things (IoT) device, etc.

Throughout this description, the terms UE 110, UE and transmitting device may be used interchangeably. Additionally, the terms UE 112, further UE and receiving device may also be used interchangeably. It should also be understood that an actual network arrangement may include any number of UEs being used by any number of users. Thus, the example of two UEs 110, 112 is merely provided for illustrative purposes.

The UEs 110, 112 may communicate directly with one or more networks. In the example of the network configuration 100, the networks with which the UEs 110, 112 may wirelessly communicate are a 5G NR radio access network (5G NR-RAN) 120, an LTE radio access network (LTE-RAN) 122 and a wireless local access network (WLAN) 124. These types of networks may support sidelink communication, e.g. over a 3GPP-specified sidelink (SL). However, the UE 110 may also communicate with other types of networks and the UE 110 may also communicate with networks over a wired connection. Therefore, the UEs 110, 112 may include a 5G NR chipset to communicate with the 5G NR-RAN 120, an LTE chipset to communicate with the LTE-RAN 122 and an ISM chipset to communicate with the WLAN 124.

The 5G NR-RAN 120 and the LTE-RAN 122 may be portions of cellular networks that may be deployed by cellular providers (e.g., Verizon, AT&T, T-Mobile, etc.). These networks 120, 122 may include, for example, cells or base stations (Node Bs, eNodeBs, HeNBs, eNBS, gNBs, gNodeBs, macrocells, microcells, small cells, femtocells, etc.) that are configured to send and receive traffic from UEs that are equipped with the appropriate cellular chip set. The WLAN 124 may include any type of wireless local area network (WiFi, Hot Spot, IEEE 802.11x networks, etc.) .

The UEs 110, 112 may connect to the 5G NR-RAN via the gNB 120A. The gNB 120A may be configured with the necessary hardware (e.g., antenna array), software and/or firmware to perform massive multiple in multiple out (MIMO) functionality. Massive MIMO may refer to a base station that is configured to generate a plurality of beams for a plurality of UEs. Reference to a single gNB 120A is merely for illustrative purposes. The exemplary embodiments may apply to any appropriate number of gNBs. The UEs 110, 112 may also connect to the LTE-RAN 122 via the eNB 122A.

Those skilled in the art will understand that any association procedure may be performed for the UEs 110, 112 to connect to the 5G NR-RAN 120 and the LTE-RAN 122. For example, as discussed above, the 5G NR-RAN 120 and the LTE-RAN 122 may be associated with a particular cellular provider where the UEs 110, 112 and/or the user thereof has a contract and credential information (e.g., stored on a SIM card). Upon detecting the presence of the 5G NR-RAN 120, the UEs 110, 112 may transmit the corresponding credential information to associate with the 5G NR-RAN 120. More specifically, the UEs 110, 112 may associate with a specific base station (e.g., the gNB 120A of the 5G NR-RAN 120, the eNB 122A of the LTE-RAN 122).

The UEs 110, 112 may also communicate with one another directly using a device-to-device (D2D) communications link. This D2D link may comprise e.g., a sidelink (SL), a wired connection, WiFi, Bluetooth, etc. In the D2D link, the information and/or data transmitted directly from one endpoint to the other endpoint (e.g., from the UE 110 to the UE 112) does not go through a cell (e.g., gNB 120A, eNB 122A). When a sidelink is configured, the UEs 110, 112 may receive information from a cell regarding how the sidelink is to be established, maintained and/or utilized. Thus, a network (e.g., the 5G NR-RAN 120, LTE-RAN 122) may control the sidelink. In other embodiments, the UEs 110, 112 may control the sidelink. Regardless of the nature of the D2D link, the UEs 110, 112 may maintain a downlink/uplink to a currently camped cell (e.g., gNB 120A, eNB 122A) and a D2D link to the other UE simultaneously. Although only two UEs 110, 112 are shown, the exemplary embodiments described herein may extend to additional UEs, as will be described below.

In addition to the networks 120, 122 and 124 the network arrangement 100 also includes a cellular core network 130, the Internet 140, an IP Multimedia Subsystem (IMS) 150, and a network services backbone 160. The cellular core network 130 may be considered to be the interconnected set of components that manages the operation and traffic of the cellular network. The cellular core network 130 also manages the traffic that flows between the cellular network and the Internet 140. The IMS 150 may be generally described as an architecture for delivering multimedia services to the UE 110 using the IP protocol. The IMS 150 may communicate with the cellular core network 130 and the Internet 140 to provide the multimedia services to the UE 110. The network services backbone 160 is in communication either directly or indirectly with the Internet 140 and the cellular core network 130. The network services backbone 160 may be generally described as a set of components (e.g., servers, network storage arrangements, etc.) that implement a suite of services that may be used to extend the functionalities of the UE 110 in communication with the various networks.

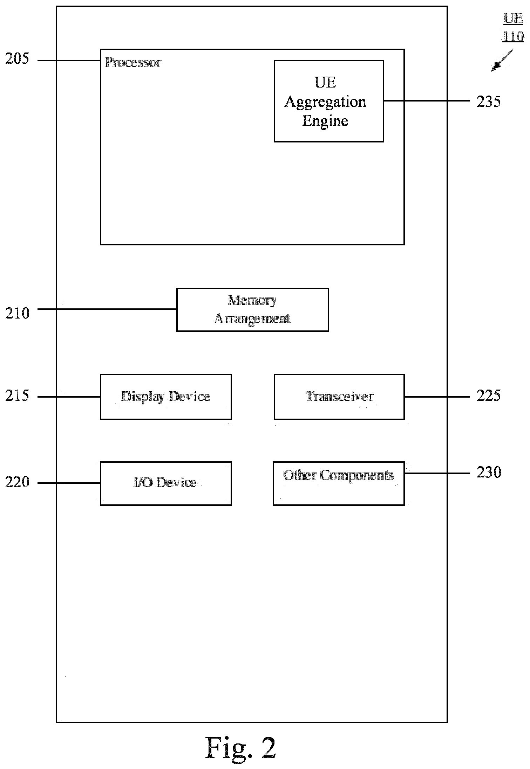

Fig. 2 shows an exemplary UE 110 according to various exemplary embodiments. The UE 110 will be described with regard to the network arrangement 100 of Fig. 1. The UE 110 may include a processor 205, a memory arrangement 210, a display device 215, an input/output (I/O) device 220, a transceiver 225, and other components 230. The other components 230 may include, for example, a SIM card, an embedded SIM (eSIM), an audio input device, an audio output device, a power supply, a data acquisition device, ports to electrically connect the UE 110 to other electronic devices, etc. The UE 110 illustrated in Fig. 2 may also represent the UE 112.

The processor 205 may be configured to execute a plurality of engines of the UE 110. For example, the engines may include a UE aggregation engine 235. According to some aspects of the exemplary embodiments, the UE aggregation engine 235 may be considered a new protocol layer located in between the IP layer and the SDAP layer (or PDCP layer, for some LTE devices) in the UE user plane.

For a primary UE (e.g., UE 110), the UE aggregation engine 235 may perform operations including receiving UL traffic from the IP layer and determining whether to transmit the UL packets via a primary network link between the primary UE (e.g., UE 110) and the network or to distribute the UL traffic to a secondary UE (e.g., UE 112) for transmission via a secondary network link between the secondary UE 112 and the network. The primary and secondary UEs 110, 112 may communicate via a device-to-device (D2D) link, wherein the primary UE transmits some portion of UL packets to the second UE, which then forwards the packets to the network via the second network link.

For the primary UE 110, the UE aggregation engine 235 may perform further operations including adding an aggregation header (e.g., generic routing encapsulation (GRE) header) to the IP packets (encapsulating the packets). The primary UE 110 may receive a network configuration for directing the flow of the IP packets to the primary link or the secondary link, to be explained in further detail below.

For the secondary UE 112, the UE aggregation engine 235 may perform operations including receiving the encapsulated UL packets and re-transmitting the packets via the secondary link based on the information included in the aggregation header. The UE aggregation engine 235 may receive a network configuration establishing the aggregation functionality for the secondary UE 112.

The UE aggregation functionalities of the primary UE 110 and the secondary UE 100 described above may be included in both UEs 110, 112. The distinction between the operations performed by the UEs 110, 112 is provided only for illustrative purposes with respect to the operation of the exemplary embodiments, wherein one UE is configured as a primary UE and one or more further UEs are configured as secondary UEs.

The above referenced engines each being an application (e.g., a program) executed by the processor 205 is only exemplary. The functionality associated with the engines may also be represented as a separate incorporated component of the UE 110 or may be a modular component coupled to the UE 110, e.g., an integrated circuit with or without firmware. For example, the integrated circuit may include input circuitry to receive signals and processing circuitry to process the signals and other information. The engines may also be embodied as one application or separate applications. In addition, in some UEs, the functionality described for the processor 205 is split among two or more processors such as a baseband processor and an applications processor. The exemplary embodiments may be implemented in any of these or other configurations of a UE.

The memory arrangement 210 may be a hardware component configured to store data related to operations performed by the UE 110. The display device 215 may be a hardware component configured to show data to a user while the I/O device 220 may be a hardware component that enables the user to enter inputs. The display device 215 and the I/O device 220 may be separate components or integrated together such as a touchscreen. The transceiver 225 may be a hardware component configured to establish a connection with the 5G NR-RAN 120, the WLAN 122, etc. Accordingly, the transceiver 225 may operate on a variety of different frequencies or channels (e.g., set of consecutive frequencies).

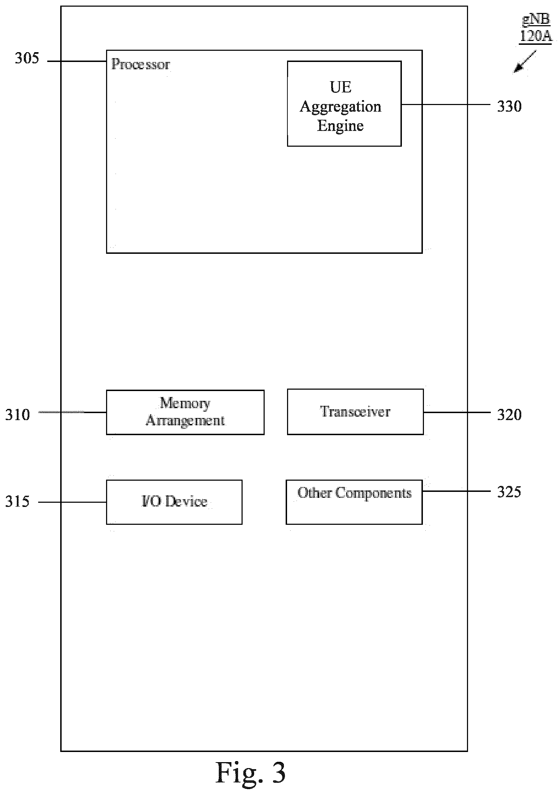

Fig. 3 shows an exemplary network base station, in this case gNB 120A, according to various exemplary embodiments. As noted above with regard to the UE 110, the gNB 120A may represent a serving cell for the UE 110. The gNB 120A may represent any access node of the 5G NR network through which the UE 110 may establish a connection and manage network operations.

The gNB 120A may include a processor 305, a memory arrangement 310, an input/output (I/O) device 320, a transceiver 325, and other components 330. The other components 330 may include, for example, an audio input device, an audio output device, a battery, a data acquisition device, ports to electrically connect the gNB 120A to other electronic devices, etc.

The processor 305 may be configured to execute a plurality of engines of the gNB 120A. For example, the engines may include a UE aggregation engine 330 configured to perform operations for the gNB 120A including configuring the UE aggregation functionality for the primary and secondary UEs. For example, the gNB 120A may configure aggregation layers for the primary and secondary UEs that control the flow of traffic to/from the primary UE. The gNB 120A may additionally receive the encapsulated packets from the primary and secondary UEs and reorder the packets according to the sequence number and the identifying information, e.g., QoS flow ID, included in the aggregation header. The aggregation functionality described herein may be abstracted as an "Aggregation layer," similar to the UEs 110, 112.

The functionality of the UE aggregation engine 330 may be implemented via one or more applications, may also be represented as a separate incorporated component of the gNB 120A or may be a modular component coupled to the gNB 120A, e.g., an integrated circuit with or without firmware. For example, the integrated circuit may include input circuitry to receive signals and processing circuitry to process the signals and other information. In addition, in some gNBs, the functionality described for the processor 305 is split among a plurality of processors (e.g., a baseband processor, an applications processor, etc.). The exemplary aspects may be implemented in any of these or other configurations of a gNB.

The memory 310 may be a hardware component configured to store data related to operations performed by the UEs 110, 112. The I/O device 320 may be a hardware component or ports that enable a user to interact with the gNB 120A. The transceiver 325 may be a hardware component configured to exchange data with the UE 110 and any other UE in the system 100. The transceiver 325 may operate on a variety of different frequencies or channels (e.g., set of consecutive frequencies). Therefore, the transceiver 325 may include one or more components (e.g., radios) to enable the data exchange with the various networks and UEs.

Various mechanisms exist by which a UE may transmit/receive data over multiple different communications paths. For example, in dual-connectivity (DC) operation, a UE is configured to transmit and receive on a plurality of component carriers (CCs) corresponding to cells associated with different RATs, e.g., EN-DC operation wherein the UE uses a master cell group (MCG) corresponding to LTE and a secondary cell group (SCG) corresponding to 5G NR, or NE-DC operation, where the MCG corresponds to NR and the SCG corresponds to LTE.

In another example, in LTE/WLAN Radio Level Integration Using IPSec Tunnel (LWIP) operation, the UE may use WLAN radio resources via IPsec protocol tunneling to authenticate and encrypt packets (e.g., IP packets) sent over the WLAN network connection. IPsec tunneling may include encapsulating the entirety of original IP packets and adding a new packet header, thereby protecting the original header of the IP packets. In the uplink, IP packets may be encapsulated in a GRE packet (formally, in the LWIPEP layer), and the LWIPEP packets can then be sent over either LTE or WLAN (via a secure IP tunnel).

The generic routing encapsulation (GRE) protocol provides a means for encapsulating data packets using one protocol inside the packets of another protocol to establish a direct point-to-point connection across a network, otherwise referred to as GRE tunneling. A first GRE entity may add a GRE header to received data packets including information for the origin/destination of the packet and transmit the encapsulated packets to a second GRE entity for e.g. decryption and/or further processing.

According to various exemplary embodiments described herein, a UE aggregation functionality is configured for a primary UE and at least one secondary UE wherein UL traffic generated by the primary UE, e.g., IP packets, may be routed to the network via the radio link of the primary UE or the radio link of the secondary UE.

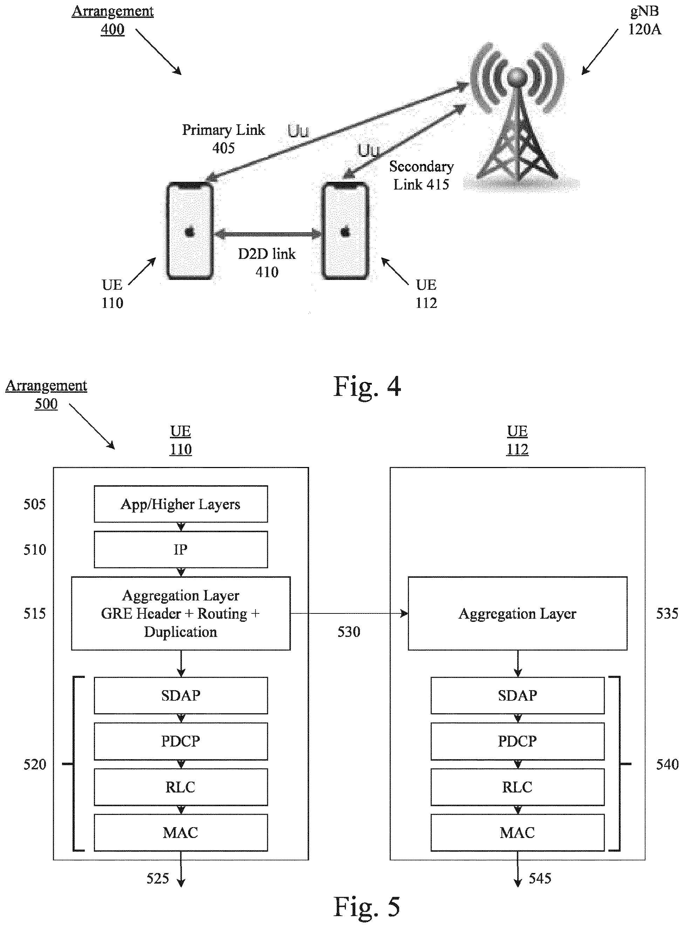

Fig. 4 shows an exemplary network arrangement 400 for UE aggregation operations according to various exemplary embodiments described herein. Similar to the network arrangement 100 described above in Fig. 1, the network arrangement 400 includes two UEs, e.g., UE 110 and UE 112, and a network base station, e.g., gNB 120A. In this example, the UE 110 is a primary UE and the UE 112 is a secondary UE in the UE aggregation configuration. However, as described above, the respective UEs 110, 112 may operate as either a primary UE or a secondary UE, depending on UE capability and/or the network configuration.

As shown, the UE 110 (primary UE) is connected to the gNB 120A via a primary link 405 and to the UE 112 (secondary UE) via a D2D link 410, e.g., a wired connection, a WLAN link, a sidelink, etc. The UE 112 is connected to the gNB 120A via a secondary link 415. Although only two UEs 110, 112 are shown, additional UEs may be configured as secondary UEs and have respective D2D links to the primary UE 110 and radio links to the gNB 120A.

According to various exemplary embodiments to be described below, the primary UE 110 may transmit UL data packets to the gNB 120A via the primary link 405 or to the secondary UE 112 via the D2D link 410. The secondary UE 112, upon receiving the UL packets, can forward the packets to the gNB 120A. In this way, the primary UE 110 can aggregate the bandwidth of the secondary UE 112 with its own bandwidth to transmit/receive a greater amount of data via the primary and secondary links 405, 415 than would be possible using only the primary link 405. The exemplary embodiments are agnostic to the type of D2D link used between the primary and secondary UEs 110, 112.

The aggregation functionality may be abstracted as a new protocol layer, referred to herein as an "Aggregation layer" added between the IP layer and the UE user plane protocol stack, e.g., the SDAP of a 5G UE (or some LTE UEs) or the PDCP of some LTE UEs. The Aggregation layer is designed to have a minimal impact on the existing user plane (SDAP, PDCP, RLC) access stratum (AS) layers and may support both aggregation and duplication. As will be described in further detail below, the network can configure the Aggregation layer to control how the UL traffic is distributed.

A tunneling mechanism is used to encapsulate the IP packets and transmit the IP packets over the multiple paths. The tunneling mechanism is described herein as GRE, however any protocol capable of carrying a *Sequence* field and a *Key* field, as described in further detail below, can be used. For example, the Generic Network Virtualization Encapsulation (GENEVE) tunneling mechanism may be used. To encapsulate the IP packets, the Aggregation layer adds a GRE header to the IP packets.

According to one aspect, the exemplary GRE header contains both a *Sequence* field and a *Key* field. The *Sequence* field provides an ordering for the IP packets, and the *Key* field provides identifying information for the packet. In one embodiment, when the network is a 5G NR R_AN or an LTE network using the SDAP layer, the *Key* field may include a quality of service (QoS) flow identifier (ID) (QFI) and either a data radio bearer (DRB) ID or a protocol data unit (PDU) session ID for the IP packet. In another embodiment, when the network is an LTE network not using the SDAP layer (wherein the PDCP is the highest layer in the user plane), the *Key* field may include a DRB ID.

In some exemplary embodiments, the above-described fields included in the GRE header result in a 12 byte overhead, which is an acceptable overhead particularly when the packet size is large and when reliability is more important than capacity.

The encapsulated packets may be transmitted from the primary UE to the network over the primary link or to the secondary UE over the D2D link. Specifically, to be described below, the Aggregation layer of the primary UE may transmit the packets to the Aggregation layer of the secondary UE, which may process the GRE header and forward the packets to the network over the secondary link based on the identifying information included in the header and/or based on a network configuration for e.g., packet filtering.

Fig. 5 shows a protocol stack arrangement 500 for a primary UE and a secondary UE in a UE aggregation arrangement according to various exemplary embodiments described herein. Similar to above, in the arrangement 500, the UE 110 functions as the primary UE and the UE 112 functions as the secondary UE. Each of the UEs 110, 112 may be configured for UE aggregation functionality using an Aggregation layer located in the UE protocol stack below the IP layer and above the user plane (e.g., the SDAP, PDCP, RLC and MAC layers in NR and some LTE releases, or the PDCP, RLC and MAC layers in some other LTE releases). The primary UE 110 has a primary radio link 525 with the network and a D2D link 530 with the secondary UE 112, and the secondary UE 112 has a secondary radio link 545 with the network.

The protocol stack of the primary UE 110 comprises an application layer / higher layers 505 which may generate UL data packets for transmission to the network. For example, a user of the UE 110 may interact with software applications being executed by, for example, the processor of the UE. Below the higher layers 505 is the IP layer 510, which may perform packet addressing and routing by e.g., assigning IP addresses to the data packets received from the higher layers 505 and transmitting the packets to the Aggregation layer 515.

The Aggregation layer 515 of the primary UE 110 is configured for various functionalities for executing the UE aggregation operations, as described above. In one aspect, the Aggregation layer 515 identifies information for the UL packets received from the higher layers 505, 510, e.g., QFI and/or DRB ID or PDU session ID, and adds the GRE header to the packets including the sequence and key information. In some embodiments, the Aggregation layer 515 can determine which QoS flows can be aggregated, which QoS flows can be duplicated, and which QoS flows can be both aggregated and duplicated, for example when multiple secondary UEs 112 are involved. The Aggregation layer 515 may then submit the encapsulated packets to the lower layers 520 of the primary UE 110, e.g., the SDAP layer, or to the Aggregation layer 535 of the secondary UE 112 over the D2D link 530. The Aggregation layer 535 of the secondary UE 112 may process the encapsulated packets and transmit the packets to the lower layers 545 of the secondary UE 112 for transmission to the network. For example, the secondary UE 112 may use the information included in the GRE header or a network configuration to direct the traffic to the network in accordance therewith.

When the network (e.g., gNB 120A) receives the packets via the primary and secondary links 525, 545, the gNB 120A processes the GRE header, identifies the QoS flow and reorders the packets based on the *Sequence* numbers.

The network may be aware of the identifying information for the packet, e.g., the QFI and the DRB ID or PDU session ID, when the packet is received. For example, DRBs may be mapped one-to-one to logical channels, and the network knows which logical channel the received data belongs to. Thus, in some embodiments, the *Key* field may be dropped from the GRE header for the UL transmissions via the primary and secondary links 525, 545 to reduce the overhead of the UE aggregation operation. Similarly, for DL transmissions to the UE, the UE may be aware of the identifying information for the packet so the *Key* field may be dropped from the GRE header.

The Aggregation layer is configured to distribute the data flows via the multiple paths based on a network configuration. The network can configure which QoS flows are to be processed by the Aggregation layer, how many UEs are involved, and whether and how to perform packet duplication. The packets can be distributed to the UEs in multiple ways for transmission to the network.

In one embodiment, the network may configure packet duplication for the primary UE, wherein the first UE duplicates the encapsulated packets and transmits the encapsulated packets via the first radio link and transmits the duplicated packets to the second UE for transmission via the second radio link. The packet duplication can be configured via RRC signaling and activated via RRC or MAC CE.

In another embodiment, a threshold may be provided wherein, when a UL data buffer size is less than the threshold, the primary UE transmits via a prioritized link, e.g., the primary link. If the buffer size is above the threshold, the primary UE may distribute the traffic via both the primary and secondary links.

According to the claimed invention, the network restricts the traffic flow based on QFI. Another non-claimed example is to restrict network traffic based on DRB ID. For example, the network may configure which QoS flows / DRBs can be aggregated and which QoS flows / DRBs can be submitted by the secondary UEs. In some embodiments, the network may configure which QoS flows can be aggregated, which QoS flows can be duplicated, and which QoS flows can be both aggregated and duplicated, for example when multiple secondary UEs are involved.

In still another embodiment, the network may provide a splitting ratio and a window per QFI/DRB. For example, the network may configure a splitting ratio and a time window wherein 40% of the packets in a certain time window are routed to the primary UE and 60% of the packets in the window are routed to the secondary UE. In another example, the network may configure a splitting ratio and a packet count window wherein 30% of packets in every set of 1000 packets are routed to the primary UE, 30% of the packets are routed to a first secondary UE, and 40% of the packets are routed to a second secondary UE.

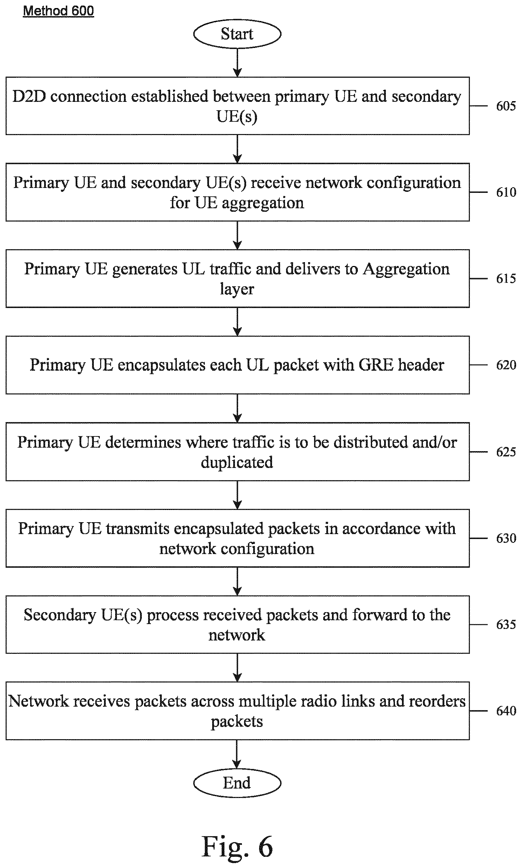

Fig. 6 shows an exemplary method 600 for UE aggregation operations according to various exemplary embodiments described herein.

In 605, a primary UE and at least one secondary UE establish a D2D connection. The D2D connection may comprise a sidelink, a wired connection, WiFi, Bluetooth, or any other D2D connection. The primary and one or more secondary UEs are each additionally connected to a network, e.g., the 5G NR RAN, via a network base station.

In 610, the primary and secondary UEs receive a network configuration for UE aggregation operation. The configuration includes an identification of the primary UE and one or more secondary UEs and a protocol layer abstraction (Aggregation layer) for performing the respective aggregation functionalities. For example, the Aggregation layer of the primary UE is configured for receiving and encapsulating IP packets and routing the packets via the multiple UEs for transmission to the network. According to the claimed invention, the primary UE is configured with rules for packet transmission via the multiple paths based on QFI. As a non-claimed alternative, the primary UE may be configured with rules for packet transmission via the multiple paths based on DRB ID. The Aggregation layers of the secondary UEs may be configured to receive the encapsulated packets, determine the identifying information for the packet and transmit the packets via respective secondary radio links.

In 615, the primary UE generates UL traffic that is delivered from the IP layer to the Aggregation layer.

In 620, the primary UE encapsulates each UL packet with a header e.g., a GRE header. The GRE header includes a *Sequence* and *Key* field, as described above.

In 625, the primary UE determines whether the UL traffic can be aggregated and/or duplicated across the secondary UE(s) and, when it can be aggregated/duplicated, which UE(s) the traffic should be routed to. The primary UE makes this determination based on the network configuration. For example, the network may configure certain QoS flows or DRBs for aggregation/duplication. In another example, the network may configure a buffer size threshold wherein, when the buffer size is below the threshold, a certain radio link is prioritized. In still another example, the network may configure a splitting ratio for distributing the packets across the UEs.

In 630, the primary UE transmits the encapsulated packets in accordance with the network configuration. The packets may be transmitted to the lower layers of the primary UE for transmission to the network or to the Aggregation layer(s) of the secondary UEs.

In 635, the secondary UEs process any packets received from the primary UE and forward the packets to the network in accordance with the information included in the GRE header and/or based on a network configuration for e.g. packet filtering. In some embodiments, the identifying information (QFI, DRB ID, PDU session ID) can be removed from the GRE header prior to forwarding the packet.

In 640, the network receives the packets across the multiple radio links and reorders the packets based on the *Sequence* field in the GRE header and the QoS flow for the packet.

The exemplary embodiments above are described primarily with respect to UL transmissions from a UE. However, a similar mechanism may be used for DL transmissions to a UE. For example, a base station may transmit encapsulated DL packets across multiple radio links of connected UEs. DL packets received at the secondary UEs may be processed and forwarded to the primary UE based on the information included in the GRE header, and the primary UE may reorder the packets based on sequence and QoS flow.

## Claims

1. A processor of a first user equipment, UE, configured to perform operations comprising:
establishing (605) a device-to-device, D2D, connection with a second UE;
generating (615) internet protocol, IP, packets for uplink, UL, transmission to a network and identifying a quality of service, QoS, flow for the packets;
encapsulating (620) each packet with a header comprising a QoS flow identifier, QFI;
receiving (610) a network configuration to restrict a traffic flow based on QFI, the configuration including parameters for determining (625) whether to distribute the encapsulated packets to lower layers of the first UE for transmission to a network via the first radio link or to the second UE for transmission to the network via the second radio link based on the QFI;
transmitting (630), in accordance with the network configuration, a first portion of the encapsulated packets to the network via a first radio link; and
transmitting (630), in accordance with the network configuration, a second portion of the encapsulated packets to the second UE via the D2D connection for transmission to the network via a second radio link of the second UE.

2. The processor of claim 1, wherein the header further comprises a sequence number and a data radio bearer, DRB, ID or a protocol data unit, PDU, session ID identified from the IP packet.

3. The processor of claim 1, wherein the network configuration indicates a buffer size threshold, wherein, when a buffer size of the first UE is below the threshold, the first UE is configured to transmit via a prioritized link of the first and second radio links and, when the buffer size is above the threshold, the first UE transmits via both the first and second radio links.

4. The processor of claim 1 or claim 3, wherein the network configuration indicates packet duplication, wherein the first UE is configured to duplicate the encapsulated packets and transmits the encapsulated packets and the duplicated packets via both the first and second radio links.

5. The processor of claim 4, wherein the packet duplication is configured by radio resource control, RRC, signaling and activated by RRC signaling or a medium access control control element, MAC-CE.

6. The processor of any of claims 1 to 5, wherein the network configuration indicates which QoS flows can be aggregated or duplicated.

7. The processor of any of claims 1 to 6, wherein the network configuration indicates a splitting ratio for splitting the encapsulated packets across the first and second radio links.

8. The processor of any of claims 1 to 7, wherein the splitting ratio is associated with a time window or packet window.

9. The processor of any preceding claim, wherein the header is a generic routing encapsulation, GRE, protocol header.

10. A user equipment, UE, comprising:
a transceiver configured to communicate with a network and a second UE; and
the processor of any of claims 1-10 that is communicatively coupled to the transceiver.

## Patentansprüche

1. Prozessor einer ersten Benutzereinrichtung, UE, der konfiguriert ist, um Operationen durchzuführen, umfassend:
Herstellen (605) einer Vorrichtung-zu-Vorrichtung-Verbindung, D2D-Verbindung, mit einer zweiten UE;
Erzeugen (615) von Internetprotokollpaketen, IP-Paketen, für eine Uplink-Übertragung, UL-Übertragung, an ein Netzwerk und Identifizieren eines Dienstqualitätsflusses, QoS-Flusses, für die Pakete;
Einkapseln (620) jedes Pakets mit einem Header, umfassend eine QoS-Flusskennung, QFI;
Empfangen (610) einer Netzwerkkonfiguration, um einen Verkehrsfluss basierend auf der QFI zu begrenzen, wobei die Konfiguration Parameter zum Bestimmen (625), ob die eingekapselten Pakete an niedrigere Schichten der ersten UE für die Übertragung an ein Netzwerk über die erste Funkstrecke oder an die zweite UE für die Übertragung an das Netzwerk über die zweite Funkstrecke basierend auf der QFI verteilt werden sollen, einschließt;
Übertragen (630), gemäß der Netzwerkkonfiguration, eines ersten Teils der eingekapselten Pakete an das Netzwerk über eine erste Funkstrecke; und
Übertragen (630), gemäß der Netzwerkkonfiguration,
eines zweiten Teils der eingekapselten Pakete an die zweite UE über die D2D-Verbindung für die Übertragung an das Netzwerk über eine zweite Funkstrecke der zweiten UE.

2. Prozessor nach Anspruch 1, wobei der Header ferner eine Sequenznummer und eine Datenfunkträger-ID, DRB-ID, oder eine Protokolldateneinheit-Sitzungs-ID, PDU-Sitzungs-ID, umfasst, die aus dem IP-Paket identifiziert wird.

3. Prozessor nach Anspruch 1, wobei die Netzwerkkonfiguration einen Puffergrößenschwellenwert angibt, wobei, wenn eine Puffergröße der ersten UE unter dem Schwellenwert liegt, die erste UE konfiguriert ist, um über eine priorisierte Verknüpfung der ersten und der zweiten Funkstrecke zu übertragen, und wenn die Puffergröße über dem Schwellenwert liegt, die erste UE sowohl über die erste als auch über die zweite Funkstrecke überträgt.

4. Prozessor nach Anspruch 1 oder 3, wobei die Netzwerkkonfiguration eine Paketduplizierung angibt, wobei die erste UE konfiguriert ist, um die eingekapselten Pakete zu duplizieren und die eingekapselten Pakete und die duplizierten Pakete sowohl über die erste als auch die zweite Funkstrecke zu übertragen.

5. Prozessor nach Anspruch 4, wobei die Paketduplizierung durch Radio Resource Control-Signalisierung, RRC-Signalisierung, konfiguriert ist und durch RRC-Signalisierung oder ein Medium Access Control-Steuerelement, MAC-CE, aktiviert wird.

6. Prozessor nach einem der Ansprüche 1 bis 5, wobei die Netzwerkkonfiguration angibt, welche QoS-Flüsse aggregiert oder dupliziert werden können.

7. Prozessor nach einem der Ansprüche 1 bis 6, wobei die Netzwerkkonfiguration ein Aufteilungsverhältnis zum Aufteilen der eingekapselten Pakete auf die erste und die zweite Funkstrecke angibt.

8. Prozessor nach einem der Ansprüche 1 bis 7, wobei das Aufteilungsverhältnis einem Zeitfenster oder Paketfenster zugeordnet ist.

9. Prozessor nach einem der vorstehenden Ansprüche, wobei der Header ein Generic Routing Encapsulation-Protokoll-Header, GRE-Protokoll-Header, ist.

10. Benutzereinrichtung, UE, umfassend:
einen Sendeempfänger, der konfiguriert ist, um mit einem Netzwerk und einer zweiten UE zu kommunizieren; und
den Prozessor nach einem der Ansprüche 1 bis 10, der mit dem Sendeempfänger kommunikativ gekoppelt ist.

## Revendications

1. Processeur d'un premier équipement utilisateur, UE, configuré pour mettre en oeuvre des opérations comprenant :
l'établissement (605) d'une connexion de dispositif à dispositif, D2D, avec un second UE ;
la génération (615) de paquets de protocole Internet, IP pour transmission en liaison montante, UL, à un réseau et l'identification d'un flux de qualité de service, QoS, pour les paquets ;
l'encapsulation (620) de chaque paquet avec un en-tête comprenant un identificateur de flux de QoS, QFI ;
la réception (610) d'une configuration réseau pour limiter un flux de trafic en fonction du QFI, la configuration comportant des paramètres permettant de déterminer (625) s'il faut distribuer les paquets encapsulés vers des couches inférieures du premier UE pour transmission à un réseau par l'intermédiaire de la première liaison radio ou vers le second UE pour transmission au réseau par l'intermédiaire de la seconde liaison radio en fonction du QFI ;
la transmission (630), conformément à la configuration réseau, d'une première partie des paquets encapsulés au réseau par l'intermédiaire d'une première liaison radio ; et
la transmission (630), conformément à la configuration réseau,
d'une seconde partie des paquets encapsulés au second UE par l'intermédiaire de la connexion D2D pour transmission au réseau par l'intermédiaire d'une seconde liaison radio du second UE.

2. Processeur selon la revendication 1, dans lequel l'en-tête comprend en outre un numéro de séquence et un ID de porteuse radio de données, DRB, ou un ID de session d'unité de données de protocole, PDU, identifié à partir du paquet IP.

3. Processeur selon la revendication 1, dans lequel la configuration réseau indique un seuil de taille de tampon, dans lequel, lorsqu'une taille de tampon du premier UE est inférieure au seuil, le premier UE est configuré pour transmettre par l'intermédiaire d'une liaison prioritaire des première et seconde liaisons radio et, lorsque la taille de tampon est supérieure au seuil, le premier UE transmet par l'intermédiaire de l'une et l'autre des première et seconde liaisons radio.

4. Processeur selon la revendication 1 ou la revendication 3, dans lequel la configuration réseau indique une duplication de paquets, dans lequel le premier UE est configuré pour dupliquer les paquets encapsulés et transmet les paquets encapsulés et les paquets dupliqués par l'intermédiaire de l'une et l'autre des première et seconde liaisons radio.

5. Processeur selon la revendication 4, dans lequel la duplication de paquets est configurée par signalisation de commande de ressource radio, RRC, et activée par signalisation RRC ou un élément de commande de commande d'accès au support, MAC-CE.

6. Processeur selon l'une quelconque des revendications 1 à 5, dans lequel la configuration réseau indique les flux de QoS qui peuvent être regroupés ou dupliqués.

7. Processeur selon l'une quelconque des revendications 1 à 6, dans lequel la configuration réseau indique un rapport de fractionnement pour le fractionnement des paquets encapsulés à travers les première et seconde liaisons radio.

8. Processeur selon l'une quelconque des revendications 1 à 7, dans lequel le rapport de fractionnement est associé à une fenêtre de temps ou une fenêtre de paquets.

9. Processeur selon l'une quelconque revendication précédente, dans lequel l'en-tête est un en-tête de protocole d'encapsulation de routage générique, GRE.

10. Équipement utilisateur, UE, comprenant :
un transcepteur configuré pour communiquer avec un réseau et un second UE ; et
le processeur selon l'une quelconque des revendications 1 à 10 qui est couplé par communications avec le transcepteur.
